# DEMANDE DE BREVET EUROPEEN

(11) **EP 4 451 149 A1**
(43) Date de publication de la demande: **23.10.2024**
(21) Numéro de dépôt: 23168274.1
(22) Date de dépôt: 17.04.2023
(51) Int. Cl.: G06F 21/33, G06F 21/64

(54) **PROCÉDÉ DE SIGNATURE ÉLECTRONIQUE QUALIFIÉE**

(71) Demandeur: IgniSign S.A., 1911 Luxembourg (LU)
(72) Inventeur: JENOUDET, Julien, 2411 Luxembourg (LU)
(74) Mandataire: Oudin, Stéphane

(57) **Abrégé**

Procédé de signature électronique qualifiée mise en oeuvre par un terminal d'un signataire et par des moyens sécurisés de gestion de clés cryptographiques permettant au signataire de signer un objet numérique quel que soit son format, ledit procédé étant caractérisé en ce qu'il comporte au moins une phase d'authentification comportant au moins les étapes suivantes :
1a) génération d'une empreinte par une clé privée d'une paire clé privée/clé publique du signataire à l'aide d'un moyen sécurisé de gestion de clés cryptographiques du signataire dans le terminal du signataire ou connecté avec le terminal du signataire, ladite clé publique étant associée à une identité,
1b) hachage d'au moins un objet à signer à l'aide d'une fonction de hachage, pour former au moins un premier élément haché,
1c) authentification du signataire à l'aide de la clé publique par un moyen sécurisé de gestion de clés cryptographiques centralisé,
et une phase d'encapsulation comportant au moins les étapes suivantes :
2a) Encapsulation, à l'aide d'une fonction d'encapsulation, de ladite empreinte, de ladite clé publique et d'un élément d'horodatage avec au moins un premier élément haché, pour former un premier élément encapsulé, dans ledit moyen sécurisé de gestion de clés cryptographiques centralisé, ledit premier élément encapsulé constituant la signature électronique qualifiée.

## Description

### Domaine technique

La présente invention concerne le domaine des signatures électroniques et plus particulièrement celui des signatures électroniques dites qualifiées selon la règlementation elDAS, c'est-à-dire équivalentes à des signatures sur papier (« wet signature ») en droit Européen.

### Technique antérieure

Dans le domaine des signatures électroniques, il est connu d'utiliser des solutions logicielles (de type Docusign avec réception d'un email, click sur un lien, transfert vers une page de visualisation du document, et click "OK" sur la page pour signer) permettant à n'importe quel utilisateur de signer électroniquement de manière simple et rapide un document. L'inconvénient de ce type de solutions est qu'elles ne permettent pas de générer des signatures suffisamment sécurisées pour être considérées qualifiées (signatures légalement valides). En effet, pour permettre une utilisation par le grand public, ces solutions techniques ont été énormément simplifiées, au détriment des aspects identification, authentification et sécurité. De plus, ces solutions permettent la signature d'un type d'objet particulier (ici un document au format pdf ou Word, et pas une image par exemple).

Pour signer des documents électroniquement, il existe également des solutions logicielles plus élaborées qui utilisent des méthodes plus ou moins poussées d'identification et d'authentification de l'utilisateur. Ces solutions sont centralisées (c'est-à-dire que la signature est produite par un matériel spécifique de type Hardware Secure Module, HSM) et standardisées (c'est-à-dire qu'elles génèrent un format particulier de document, les plus répandus étant les types PaDES et XaDES) et permettent de générer des signatures de type qualifié. Les inconvénients de ce type de solutions sont que la centralisation complexifie le processus, dégrade l'expérience utilisateur et augmente le risque. En effet, la centralisation des clefs de signature oblige le fournisseur de signature à des efforts de sécurité renforcés car la compromission de cette "centrale à signature" pourrait avoir des conséquences dévastatrices dans la mesure où l'ensemble des identités seraient compromises; bien entendu, ces efforts de sécurité se font notamment grâce à des vérifications qui dégradent l'expérience utilisateur. De plus, les standards actuels obligent d'une certaine façon à communiquer le document "en clair" à l'opérateur de signature, ce qui augmente les risques de fraude. Enfin, la standardisation contraint souvent l'usage de ce type de solution pour un type de format d'objet particulier, en excluant d'autres.

Enfin, les solutions existantes qui offrent un certain niveau de sécurité sont mises en oeuvre par des fournisseurs de signatures qui utilisent un HSM (Hardware Security Module) pour signer et cette centralisation est presque par principe incompatible avec les technologies décentralisées telles que les blockchain. En conséquence, aucune des solutions de signatures existantes ne permet de signer de manière qualifiée les contrats de type « smart contracts ». Ceci constitue un inconvénient majeur et un frein à l'utilisation de ce type de contrats qui présentent pourtant de nombreux avantages.

### Exposé de l'invention

Le but de la présente invention est donc de pallier les inconvénients précédemment cités et de proposer un procédé de signature décentralisé, sans diffusion de l'objet à signer à l'opérateur, qualifié, sécurisé, simple d'utilisation, rapide et permettant la signature de tout type d'objet. Conformément à l'invention, il est donc proposé un procédé de signature électronique qualifiée mise en oeuvre par un terminal d'un signataire et par des moyens sécurisés de gestion de clés cryptographiques permettant au signataire de signer un objet numérique quel que soit son format, ledit procédé étant remarquable en ce qu'il comporte au moins une phase d'authentification comportant au moins les étapes suivantes :
1a) génération d'une empreinte par une clé privée d'une paire clé privée/clé publique du signataire à l'aide d'un moyen sécurisé de gestion de clés cryptographiques du signataire dans le terminal du signataire ou connecté avec le terminal du signataire, ladite clé publique étant associée à une identité,
1b) hachage d'au moins un objet à signer à l'aide d'une fonction de hachage, pour former au moins un premier élément haché,
1c) authentification du signataire à l'aide de la clé publique par un moyen sécurisé de gestion de clés cryptographiques centralisé,
et une phase d'encapsulation comportant au moins les étapes suivantes :
2a) encapsulation, à l'aide d'une fonction d'encapsulation, de ladite empreinte, de ladite clé publique et d'un élément d'horodatage avec au moins un premier élément haché, pour former un premier élément encapsulé, dans ledit moyen sécurisé de gestion de clés cryptographiques centralisé, ledit premier élément encapsulé constituant la signature électronique qualifiée.

On appelle « objet numérique », un objet (par exemple, une image, un enregistrement audio, un document texte) qui a été codé numériquement et intégré à des métadonnées pour faciliter leur découverte, leur utilisation et leur stockage.

On appelle « signataire », la personne physique qui souhaite apposer sa signature sur un objet numérique.

On appelle « identité associée à la clé publique», l'état civil de la personne à laquelle appartient la clé publique.

On appelle «empreinte», une chaîne hexadécimale qui, associée à la clé publique permet de valider la possession de la clé privée (cryptographie asymétrique). Cette chaîne a pour but de vérifier que le signataire est bien en possession de la clé privée sans toutefois dévoiler cette dernière.

On appelle «terminal», un point d'accès au réseau internet (par exemple: un téléphone mobile, un ordinateur, un ASIC (circuit intégré propre à une application), une tablette...).

On appelle « moyen sécurisé de gestion de clés cryptographiques », un moyen sécurisé de stockage de clés privées et d'émission d'empreintes, par exemple de type secure enclave, carte à puce, HSM, un cold ou hot storage propre aux clefs blockchain ou une boîte noire transactionnelle.

On appelle « fonction de hachage », une fonction cryptographique qui, à une donnée de taille arbitraire, associe une image de taille fixe, et dont une propriété essentielle est qu'elle est pratiquement impossible à inverser, c'est-à-dire que si l'image d'une donnée par la fonction se calcule très efficacement, le calcul inverse d'une donnée d'entrée ayant pour image une certaine valeur se révèle impossible sur le plan pratique. Pour cette raison, on dit d'une telle fonction qu'elle est à sens unique.

On appelle « hachage » l'utilisation d'une telle fonction.

On appelle « encapsulation » un mécanisme consistant à marquer un ensemble de données, hachées ou non, de l'empreinte d'un tiers de confiance. L'encapsulation permet donc de garantir l'intégrité des données contenues dans l'objet.

On appelle « élément d'horodatage », un ensemble de caractères cryptés qui permet d'identifier de manière précise le moment où un événement s'est produit.

Avantageusement, lorsque le procédé est exécuté pour la première fois pour un signataire, il comporte une phase initiale d'identification réalisée par une entité d'identification et permettant de vérifier l'identité dudit signataire et de la lier à une clé publique, ledit procédé comportant au moins les étapes suivantes:
Da) vérification de données d'identité d'un signataire par des moyens de vérification et génération d'au moins un élément de qualification,
0b) encapsulation d'une clé publique d'une paire clé privée/clé publique, de données d'identité d'un signataire et dudit au moins un élément de qualification à l'aide d'une fonction d'encapsulation, pour former une preuve d'identification.

On appelle « données d'identité », les données personnelles (par exemple: nom, prénom, date de naissance, adresse email, numéro de téléphone, numéro de compte bancaire) qui permettent de remonter à l'identité d'une personne physique.

On appelle «moyens de vérification», un moyen permettant de vérifier l'identité réelle d'une personne, par l'accès à une elD ou à une Bank ID ou par la vérification physique d'une pièce d'identité par exemple. Les moyens de vérification permettent l'établissement d'un élément de qualification.

On appelle « élément de qualification », un élément qui indique que la vérification de l'identité du signataire a bien été effectuée de façon à garantir les données d'identité.

On appelle « preuve d'identification » un élément de type certificat électronique. Il s'agit d'une carte d'identité numérique utilisée principalement pour identifier et authentifier une personne physique ou morale.

De manière plus avantageuse, le procédé comprend une étape de publication de la correspondance entre la signature électronique qualifiée et la preuve d'identification par une infrastructure de gestion de clé.

On appelle « infrastructure de gestion de clé » (ou public key infrastructure) un ensemble de composants physiques (des ordinateurs, des équipements cryptographiques logiciels ou matériel), de procédures humaines (vérifications, validation) et de logiciels (système et application) destiné à gérer les clés publiques des utilisateurs d'un système. Une infrastructure de gestion de clés permet de lier des clés publiques à des identités (comme des noms d'utilisateurs ou d'organisations). Une infrastructure de gestion de clés fournit des garanties permettant de faire a priori confiance à une clé publique obtenue par son biais.

De manière préférentielle, l'élément de qualification est un code indiquant que l'identité du signataire a été vérifiée.

Alternativement, l'étape 2a est remplacé par l'étape 2a'suivante :
encapsulation, à l'aide d'une fonction d'encapsulation, de ladite empreinte, de ladite clé publique, de ladite preuve d'identification et d'un élément d'horodatage, avec au moins un premier élément haché, pour former un premier élément encapsulé, dans ledit moyen sécurisé de gestion de clés cryptographiques centralisé, ledit premier élément encapsulé constituant la signature électronique qualifiée.

De manière avantageuse, le moyen sécurisé de génération de clés cryptographiques du signataire est un processeur secure enclave.

Préférentiellement, le moyen sécurisé de génération de clés cryptographiques centralisé est un HSM.

De manière préférée, l'élément d'horodatage est obtenu selon l'étape suivante :
encapsulation, à l'aide d'une fonction d'encapsulation, du premier élément haché avec au moins un horodatage et une signature d'une autorité de certification de temps.

### Meilleure manière de réaliser l'invention technique.

La présente invention concerne un procédé de signature électronique qualifiée mise en oeuvre par un terminal d'un signataire et par des moyens sécurisés de gestion de clés cryptographiques permettant au signataire de signer un objet numérique quel que soit son format, ledit procédé étant remarquable en ce qu'il comporte au moins une phase d'authentification comportant au moins les étapes suivantes :
1a) génération d'une empreinte par une clé privée d'une paire clé privée/clé publique du signataire à l'aide d'un moyen sécurisé de gestion de clés cryptographiques du signataire dans le terminal du signataire ou connecté avec le terminal du signataire, ladite clé publique étant associée à une identité,
1b) hachage d'au moins un objet à signer à l'aide d'une fonction de hachage, pour former au moins un premier élément haché,
1c) authentification du signataire à l'aide de la clé publique par un moyen sécurisé de gestion de clés cryptographiques centralisé,
et une phase d'encapsulation comportant au moins les étapes suivantes :
2a) encapsulation, à l'aide d'une fonction d'encapsulation, de ladite empreinte, de ladite clé publique et d'un élément d'horodatage avec au moins un premier élément haché, pour former un premier élément encapsulé, dans ledit moyen sécurisé de gestion de clés cryptographiques centralisé, ledit premier élément encapsulé constituant la signature électronique qualifiée.

Le moyen sécurisé de gestion de clés cryptographiques du signataire dans le terminal du signataire ou connecté au terminal du signataire est par exemple, un téléphone mobile avec un processeur secure ou par exemple, un mobile ou un ordinateur connecté à un HSM (Hardware security module). Le fait d'utiliser le moyen sécurisé de génération de clés cryptographiques du signataire et le terminal du signataire pour générer une empreinte localement chez le signataire permet d'éviter le piratage à grande échelle. En effet, cette étape de génération d'empreinte n'est pas effectuée sur le moyen sécurisé de gestion de clés cryptographiques centralisé qui effectuent les étapes de la phase d'encapsulation pour tous les signataires. Ainsi, le signataire garde le contrôle exclusif de cette étape de génération d'empreinte à partir de la clé privée et un pirate qui réussirait à pirater le moyen sécurisé de gestion de clés ne pourrait pas générer d'empreintes frauduleusement. Il serait obligé pour ce faire, de pirater les équipements des différents signataires. De plus, le fait de faire générer l'empreinte par le moyen sécurisé de gestion de clés cryptographiques du signataire et pas par le moyen sécurisé de gestion de clés cryptographiques centralisé permet d'économiser les ressources mises en oeuvre. En effet, en utilisant les processus de signature intégrés dans un mobile, le procédé selon l'invention permet de diminuer le nombre d'opérations (d'environ 2/3) par rapport à une validation externe.
, donc, de la même manière, cette donnée sensible est protégée contre un piratage de l'infrastructure et le signataire reste le seul à avoir connaissance du contenu de l'objet à signer.

Cette étape de hachage de l'objet à signer peut être effectuée sur le terminal du signataire, ou sur tout autre équipement autre que le moyen sécurisé de gestion de clés cryptographiques centralisé. Cette étape a également pour objectif de permettre de s'affranchir du format de l'objet (quel que soit son format initial : jpg, xml, pdf etc...) lors de la phase d'encapsulation. En effet, les équipements utilisés en tant que moyen sécurisé de gestion de clés cryptographiques centralisé peuvent ne pas être compatibles avec certains formats d'objet, ce qui rend le traitement de ces objets impossible.

A l'étape 1a), lorsque le signataire génère une empreinte à partir de son moyen sécurisé de gestion de clés cryptographiques, il émet une chaîne hexadécimale particulière qui, associée à la clé publique permet à celui qui la reçoit de valider la possession de la clé privée. Cette chaîne a pour but de vérifier que le signataire est bien en possession de la clé privée sans toutefois dévoiler cette dernière. Dans le cas où le signataire utilise un smartphone avec un processeur secure enclave, l'émission de l'empreinte peut être enclenché par mot de passe ou identification biométrique. Le secure enclave est un moyen simple, fiable et rapide de générer une empreinte pour un signataire.

Classiquement, la fonction de hachage utilisée dans ce procédé est la fonction SHA256, mais tout autre fonction de hachage existante peut être utilisée pour réaliser cette fonction. Il est à noter que dans les années à venir, il faudra préférer les fonctions hash qui seront "quantum proof" c'est-à-dire qui pourront résister aux attaques des ordinateurs quantiques.

Par définition, l'utilisation de fonctions de hachage garantie l'intégrité de l'objet (ou document).

Les fonctions d'encapsulation utilisées sont préférentiellement des fonctions hash classique. L'utilisation de fonctions d'encapsulation lie de manière inviolable l'objet et son signataire. Ceci garantie la véracité de la signature, et rend équivalent une signature numérique et une « wet signature ».

A partir d'un seul terminal, la signature peut donc être générée. Ce procédé ne nécessite pas de serveur d'authentification du signataire au niveau du HSM puisque l'authentification se fait directement au niveau du terminal du signataire.

Avantageusement, lorsque le procédé est exécuté pour la première fois pour un signataire, il comporte une phase initiale d'identification réalisée par une entité d'identification et permettant de vérifier l'identité dudit signataire et de la lier à une clé publique, ledit procédé comportant au moins les étapes suivantes :
- 0a) vérification de données d'identité d'un signataire par des moyens de vérification et génération d'au moins un élément de qualification,
- 0b) encapsulation d'une clé publique d'une paire clé privée/clé publique, de données d'identité d'un signataire et dudit au moins un élément de qualification à l'aide d'une fonction d'encapsulation, pour former une preuve d'identification.

Les moyens de vérification peuvent consister en des moyens de vérification physique : le signataire peut se rendre dans un guichet physique avec ses papiers d'identités pour qu'un contrôle d'identité soit réalisé, ou ce contrôle peut également être effectué à distance par le biais d'une webcam en ligne par exemple. D'autres moyens de vérification sont possibles, à l'aide de données bancaires par exemple ou de toute chaîne de confiance permettant de remonter de manière fiable à l'identité du signataire.

De manière plus avantageuse, le procédé comprend une étape de publication de la correspondance entre la signature électronique qualifiée et la preuve d'identification par une infrastructure de gestion de clé.

Une « infrastructure de gestion de clé » (ou public key infrastructure) est un ensemble de composants physiques (des ordinateurs, des équipements cryptographiques logiciels ou matériel), de procédures humaines (vérifications, validation) et de logiciels (système et application) destiné à gérer les clés publiques des utilisateurs d'un système. Une infrastructure de gestion de clés permet de lier des clés publiques à des identités (comme des noms d'utilisateurs ou d'organisations). Une infrastructure de gestion de clés fournit des garanties permettant de faire a priori confiance à une clé publique obtenue par son biais.

La preuve d'identification (ou certificat) est affichée sur l'infrastructure et comporte le nom du signataire, un numéro d'identification unique ainsi que le nom de l'application pour laquelle elle a été générée.

De manière préférentielle, l'élément de qualification est un code indiquant que l'identité du signataire a été vérifiée. Il est classiquement appelé certificat.

Alternativement, l'étape 2a est remplacé par l'étape 2a'suivante : Encapsulation, à l'aide d'une fonction d'encapsulation, de ladite empreinte, de ladite clé publique, de ladite preuve d'identification et d'un élément d'horodatage, avec au moins un premier élément haché, pour former un premier élément encapsulé, dans ledit moyen sécurisé de gestion de clés cryptographiques centralisé, ledit premier élément encapsulé constituant la signature électronique qualifiée.

De manière avantageuse, le moyen sécurisé de génération de clés cryptographiques du signataire est un processeur secure enclave à l'intérieur d'un téléphone mobile pour des questions de convenance pour l'utilisateur. Ce moyen peut également être une blockchain, une carte à puce ou encore un HSM (Hardware Security Module ou boîte noire transactionnelle) mais ces derniers sont moins versatiles.

Préférentiellement, le moyen sécurisé de génération de clés cryptographiques centralisé est un HSM afin de protéger l'intégrité de la relation entre l'identité de l'utilisateur et la paire de clefs générée dans son mobile.

De manière préférée, l'élément d'horodatage est obtenu selon l'étape suivante :
Encapsulation, à l'aide d'une fonction d'encapsulation, du premier élément haché avec au moins un horodatage et une signature d'une autorité de certification de temps.

## Revendications

1. Procédé de signature électronique qualifiée mise en oeuvre par un terminal d'un signataire et par des moyens sécurisés de gestion de clés cryptographiques permettant au signataire de signer un objet numérique quel que soit son format, ledit procédé étant **caractérisé en ce qu'**il comporte au moins une phase d'authentification comportant au moins les étapes suivantes :
1a) génération d'une empreinte par une clé privée d'une paire clé privée/clé publique du signataire à l'aide d'un moyen sécurisé de gestion de clés cryptographiques du signataire dans le terminal du signataire ou connecté avec le terminal du signataire, ladite clé publique étant associée à une identité,
1b) hachage d'au moins un objet à signer à l'aide d'une fonction de hachage, pour former au moins un premier élément haché,
1c) authentification du signataire à l'aide de la clé publique par un moyen sécurisé de gestion de clés cryptographiques centralisé,
et une phase d'encapsulation comportant au moins les étapes suivantes :
2a) Encapsulation, à l'aide d'une fonction d'encapsulation, de ladite empreinte, de ladite clé publique et d'un élément d'horodatage avec au moins un premier élément haché, pour former un premier élément encapsulé, dans ledit moyen sécurisé de gestion de clés cryptographiques centralisé, ledit premier élément encapsulé constituant la signature électronique qualifiée.

2. Procédé de signature électronique qualifiée selon la revendication précédente, **caractérisé en ce que** lorsque le procédé est exécuté pour la première fois pour un signataire, il comporte une phase initiale d'identification réalisée par une entité d'identification et permettant de vérifier l'identité dudit signataire et de la lier à une clé publique, ledit procédé comportant au moins les étapes suivantes :
Da) Vérification de données d'identité d'un signataire par des moyens de vérification et génération d'au moins un élément de qualification,
0b) Encapsulation d'une clé publique d'une paire clé privée/clé publique, de données d'identité d'un signataire et dudit au moins un élément de qualification à l'aide d'une fonction d'encapsulation, pour former une preuve d'identification.

3. Procédé de signature électronique qualifiée selon la revendication précédente, caractérisé en qu'il comprend une étape de publication de la correspondance entre la signature électronique qualifiée et la preuve d'identification par une infrastructure de gestion de clé.

4. Procédé de signature électronique qualifiée selon la revendication précédente, **caractérisé en ce que** l'élément de qualification est un code indiquant que l'identité du signataire a été vérifiée.

5. Procédé de signature électronique qualifiée selon la revendication 2, **caractérisé en ce que** l'étape 2a est remplacé par l'étape 2a'suivante :
encapsulation, à l'aide d'une fonction d'encapsulation, de ladite empreinte, de ladite clé publique, de ladite preuve d'identification et d'un élément d'horodatage, avec au moins un premier élément haché, pour former un premier élément encapsulé, dans ledit moyen sécurisé de gestion de clés cryptographiques centralisé, ledit premier élément encapsulé constituant la signature électronique qualifiée.

6. Procédé de signature électronique qualifiée selon l'une quelconque des revendications précédentes, **caractérisé en ce que** le moyen de génération de clés cryptographiques sécurisé est un processeur secure enclave.

7. Procédé de signature électronique qualifiée selon l'une quelconque des revendications précédentes, **caractérisé en ce que** le moyen sécurisé de génération de clés cryptographiques centralisé est un HSM.

8. Procédé de signature électronique qualifiée selon l'une quelconque des revendications précédentes, **caractérisé en ce que** l'élément d'horodatage est obtenu selon l'étape suivante: encapsulation, à l'aide d'une fonction d'encapsulation, du premier élément haché avec au moins un horodatage et une signature d'une autorité de certification de temps.
